# EUROPEAN PATENT SPECIFICATION

(11) **EP 3 526 446 B1**
(45) Date of publication and mention of the grant of the patent: **06.12.2023**
(21) Application number: 16782054.7
(22) Date of filing: 14.10.2016
(51) Int. Cl.: E21F 13/02, E21F 13/08, G05D 1/02, G01S 17/42, G01S 17/87, G01S 17/89, B65G 41/00

(54) **SCANNING-BASED STEERING OF A MOBILE HAULAGE SYSTEM FOR CONTINUOUSLY CONVEYING FRAGMENTED MATERIAL**
SCANBASIERTE LENKUNG EINES MOBILEN FÖRDERSYSTEMS ZUM KONTINUIERLICHEN FÖRDERN VON GEBROCHENEM MATERIAL
DIRECTION À BALAYAGE D'UN SYSTÈME DE ROULAGE MOBILE POUR TRANSPORTER EN CONTINU UN MATÉRIAU FRAGMENTÉ

(43) Date of publication of application: 21.08.2019
(73) Proprietor: Sandvik Intellectual Property AB, 811 81 Sandviken (SE)
(72) Inventor: RIEGER, Hubert, 8740 Möbersdorf-Siedlung (AT)
(74) Representative: Sandvik
(86) International application number: PCT/EP2016/074732
(87) International publication number: WO 2018/068866

(56) References cited:
- WO-A2-02/30792
- DE-A1-102009 051 450
- US-A1- 2014 324 267
- US-A1- 2015 094 913

## Description

### Field of invention

The invention relates to an operation arrangement and a method for operating a mobile haulage arrangement for continuously conveying fragmented material in a conveying direction as well as to a mobile haulage arrangement for continuously conveying fragmented material in a conveying direction.

### Background art

Mobile haulage arrangements operation arrangements and methods for operating such mobile haulage arrangements are known, for example from US 2014/0190788 A1, EP 2 125 582 B1, US 4,951,801 A, US 5,246,274 A, US 4,089,403 A, WO 2002/30792 A2, DE 10 2011 105 747 A1, or US 2001/0001434 A1.

DE102009051450 relates to a solids conveyor and a method of controlling a solids conveyor, wherein the solids conveyor comprises a plurality of travel modules which are arranged one behind the other in series and respectively connected together, each travel module has at least two separately driveable propulsion units in the form of wheels, travel chains or the like, for each propulsion unit at least one sensor provides a measurement value describing the travel thereof for a measurement value storage means, and the measurement values of each preceding travel module are forwarded to the following travel module for positioning thereof.

US2015094913 relates to a method for maneuvering a mobile mining machine in a tunnel, wherein the mobile mining machine includes two or more self steered and optionally self propelled interconnected units being connected as train units over a respective articulating joint, the method includes: producing a set of first signals representative of sideward distances between at least one side of the mobile mining machine and a respective nearby wall of said tunnel; and evaluating said set of first signals so as to determine a sideways position of the mobile mining machine in respect of the walls of said tunnel during driving; and producing steering commands to be sent to a propulsion arrangement in order to maintain a position of the mobile mining machine to ensure clearance to tunnel walls during driving.

However, further improvements are sought.

It is therefore an object of the present invention to provide an improved operation arrangement and an improved method for operating a mobile haulage arrangement for continuously conveying fragmented material in a conveying direction as well as an improved mobile haulage arrangement for continuously conveying fragmented material in a conveying direction. In particular, it is an object of the present invention to provide an operation arrangement and a method for operating a mobile haulage arrangement for continuously conveying fragmented material in a conveying direction as well as a mobile haulage arrangement for continuously conveying fragmented material in a conveying direction, which allows for more reliable and/or more cost effective navigation and/or movement of a mobile haulage arrangement, in particular in mining shafts of an underground mining site

### Summary of the Invention

According to a first aspect of the invention, the object is solved by an operation arrangement for operating a mobile haulage arrangement for continuously conveying fragmented material in a conveying direction, comprising a first operation unit arranged at a first transport unit of the mobile haulage arrangement, and adapted for exchanging, storing and processing data and for generating a steering signal for steering the first transport unit; a second operation unit arranged at a second transport unit of the mobile haulage arrangement, and adapted for exchanging, storing and processing data and for generating a steering signal for steering the second transport unit; the first operation unit further comprising at least one first sensor arranged and adapted to scan at least a section of the surroundings in a two-dimensional manner substantially parallel to the conveying direction, in particular a section of more than 90°, preferably a section of 180° or more than 180°, e.g. 205°, or in a three-dimensional manner; the second operation unit further comprising at least one second sensor arranged and adapted to scan at least a section of the surroundings in a two-dimensional manner substantially parallel to the conveying direction, in particular a section of more than 90°, preferably a section of 180° or more than 180°, e.g. 205°, or in a three-dimensional manner; and wherein the operation arrangement is adapted to compare second scan results from the second sensor of the second operation unit with first scan results from the first sensor of the first operation unit, with the second scan results being obtained at a travel position of the second transport unit corresponding to a travel position of the first transport unit at which the first scan results were obtained, the comparison of the scan results allows to monitor, to control and/or to correct the navigation and/or steering and/or movement of the first transport unit and/or the second transport unit and/or the entire mobile haulage arrangement.

Providing the operation units with sensors allows for a cost efficient and reliable navigation and/or movement of the mobile haulage system, in particular in a mining shaft of an underground mine. For example, the scan results can be used to determine distances, e.g. between transport units and/or between a transport unit and its surroundings and/or distances covered in the mining shaft. The comparison of the scan results allows to monitor, to control and/or to correct the navigation and/or steering and/or movement of one or more transport units and/or the entire mobile haulage system. Since the comparison is based on scan results of the first and second sensors, which are obtained at substantially the same position, finding no differences or deviations in the scan results or differences below a certain threshold, indicate that the second operation unit and/or transport unit is following the path of the first operation unit and/or transport unit. Finding differences or deviations, in particular differences above a certain threshold, between the scan results indicates that the second operation unit and/or transport unit deviates from the path of the first operation unit and/or transport unit. This information is valuable in order to allow for an evaluation whether or not the deviation is significant enough for making changes, in particular in the steering signals, of the second operation unit and/or transport unit, to bring the second operation unit and/or transport unit back to the path preset by the first operation unit and/or transport unit.

Herein, a position can be understood in particular as a travel position, preferably relating to a covered distance in a mining shaft of an underground mining site. A position, in particular a travel position, preferably is determined taking into consideration travel velocity of a transport unit and/or travel time of a transport unit and/or travelled or covered distance along a travel path.

In particular, the comparison of first and second scan results obtained at corresponding travel positions of the first and second transport unit is preferably based on the following understanding. While the mobile haulage system proceeds into a mining shaft, the transport units travel on a travel path. The covered distance along this travel path can be regarded as the travel position. The covered distance and/or travel position can be determined or deducted from the travel time of a transport unit together with the travel velocity of the transport unit, for example. The first transport unit obtains first scan results of the surroundings at a first instance. At this first instance (e.g. 50 m into the mining shaft), where the first transport unit obtains the first scan results, corresponds to a particular travel position of this first travel unit, determine, for example, by the covered distance and/or travel time and/or travel velocity. When the first transfer unit moves further into the mining shaft, the second transfer unit follows and also travels further into the mining shaft. When the second transport unit reaches a travel position that corresponds to the travel position where the first transport unit obtained the first scan results (in the above-mentioned example, this would be the instance when the second transport unit has advanced 50 m into the mining shaft), the second transport unit obtains second scan results. These first and second scan results then are compared. When no deviation in the position of the first and second transport units is determined, i.e. when the scan results are in accordance with each other, this can be an indication for a situation, where the second transport unit precisely follows the path of the first transport unit. However, when the first and second scan results deviate from each other, this can be an indication for a situation, where the second transport unit has deviated from the path of the first transport unit, for example the second transport unit has moved farther to the left or right side then the first transport unit. If such a deviation is detected, steering signals can be determined in order to correct the deviation in the next movement of the second transport unit.

Preferably, the first and/or second operation unit comprises two sensors, which are further preferably positioned at opposite sides of the first and/or second operation unit and/or first and/or second transport unit, respectively.

The first and/or second sensors can be 2D and/or 3D scanners, in particular laser scanners, but alternatives are possible. Preferably, the first and/or second sensors are arranged such that the surroundings can be scanned in a substantially horizontal direction or such that scan results comprise at least a section of the surroundings in a substantially horizontal direction.

The first transport unit is preferably a loading unit. The second transport unit is preferably a discharge unit.

Preferably, the operation arrangement is adapted for deriving a position information and/or a position correction signal from the result of the comparison.

Further preferably, the first operation unit and/or the second operation unit can be adapted and arranged for substantially autonomous steering and/or navigation. In particular, the first operation unit and/or the second operation unit can be adapted and arranged to derive steering signals based on, preferably received and/or stored, information with respect to the surroundings and/or with respect to a two-dimensional and/or three-dimensional map, for example of the mining site, in particular the mining shaft(s), and/or with respect to a predetermined and/or scheduled, preferably received and/or stored, travel path for a mobile haulage system. A substantially autonomous steering and/or navigation by the first operation unit and/or the second operation unit has the advantage, that a mobile haulage arrangement can be steered and/or navigated into a mining shaft and/or out of a mining shaft preferably with out or with reduced input and/or supervision by a (human) operator.

Typically, the operation arrangement according to the invention is used for operating a mobile haulage arrangement. Such a mobile haulage arrangement with an operation arrangement according to the invention serves the requirement to convey underground mineral in a way of increasing the efficiency of the mining process by maximizing the mining machine utilization. Preferably, this means eliminating the waiting for an intermittent material clearing system in the likes of a shuttle car (batch hauling).

A mobile haulage arrangement with an operation arrangement according to the invention preferably serves as a continuous connection between devices like cutting machines, feeder breakers or direct loading in a drill and blast application and an underground fix installed conveyor. The fix installed conveyor on the mine site could be a main conveyor; trunk conveyor; or drift conveyor, for example.

The mobile haulage arrangement with an operation arrangement according to the invention preferably follows a mining machine throughout the entire mining process. During this mining process, the mining machine provides fragmented material to the mobile haulage arrangement, in particular to a loading unit of the mobile haulage arrangement. From the mobile haulage arrangement, in particular from a discharge unit of the mobile haulage arrangement, fragmented material will be loaded onto a fixed installed conveyor at mine site, which could be a main conveyor, trunk conveyor, or drift conveyor, for example.

Preferably, the mobile haulage arrangement comprises a loading unit, a discharge unit, one or several crawler units, one or several wheel units, a conveying element for conveying fragments material, for example a belt of an enclosed belt or pocket conveyor, and a support structure, preferably connecting the different units. Preferably, the loading unit will be at the front and the discharge unit will be at the end of the mobile haulage arrangement with respect to the conveying direction.

Further preferably, the entire mobile haulage arrangement or at least a, preferably major, part of it, is built up modular. Depending on the mine application the mobile haulage arrangement can be built up modular in length but also in configuration on driven modules, in particular crawler units, to non-driven modules, in particular wheel units.

In a further preferred embodiment, the steering signal comprises a target position and/or a target velocity and/or a current position and/or a current velocity and/or an acceleration signal and/or a brake signal and/or a signal indicating a change of direction and/or drive signal for a crawler track of a transport unit adapted as a crawler unit and/or a signal for extending or retracting a steering cylinder of a transport unit and/or a hydraulic cylinder of a conveyor support structure.

According to a further preferred embodiment, at least one further operation unit is arranged at the further transport unit of the mobile haulage arrangement, and adapted for exchanging, storing and processing data and for generating a steering signal for steering the further transport unit. In particular, it is preferred that the second and/or the further operation unit are adapted to receive data from the first operation unit and/or a preceding operation unit and/or are adapted to send data to a subsequent operation unit, wherein the data preferably comprises information about a distance from the second operation unit, preferably the discharge unit.

The at least one further transport unit can be realized as a wheel unit or a crawler unit, in particular. Preferably, a plurality of further operation units is arranged at a plurality of further transport units. In this case, it is preferred that some of the further transport units are wheel units and others of the further transport units are crawler units. In particular, it is preferred that in between two crawler units, one, two, three, or more wheel units are positioned. Preferably, details described herein with respect to a further operation unit and/or a further transport unit applied to a plurality of further operation units and/or a plurality of further transport units, accordingly.

It is particularly preferred that the further operation unit further comprises at least one further sensor arranged and adapted to scan at least a section of the surroundings in a two-dimensional manner substantially parallel to the conveying direction, in particular a section of more than 90°, preferably a section of 180° or more than 180°, e.g. 205°, or in a three-dimensional manner. Further preferably, the operation arrangement is adapted to compare second scan results from the further sensor of the further operation unit with first scan results from the first sensor of the first operation and/or with second scan results from the second sensor of the second operation unit, with the further scan results being obtained at a travel position of the further transport unit corresponding to a travel position of the first transport unit at which the first scan results were obtained and/or a travel position of the second transport unit at which the second scan results were obtained.

According to a preferred embodiment, the first operation unit and/or the second operation unit and/or the further operation unit comprises at least one first and/or second and/or further sensor arranged and adapted to scan at least a section of the surroundings substantially orthogonal to the conveying direction, preferably at least a section above a horizontal plane, in particular a section of more than 90° or more than 180° or more than 180°, e.g. 205°, in a two-dimensional manner or in a three-dimensional manner.

Preferably, the first and/or second and/or further operation unit comprises two sensors, which are further preferably positioned at opposite sides of the first and/or second operation unit and/or first and/or second transport unit, respectively. The first and/or second sensors and/or further can be 2D and/or 3D scanners, in particular laser scanners, but alternatives are possible. Preferably, the first and/or second and/or further sensors are arranged such that the surroundings can be scanned in a substantially vertical direction or such that scan results comprise at least a section of the surroundings in a substantially vertical direction. It is particularly preferred to scan surroundings comprising at least a part of the roof or ceiling of the mining shaft. The reason is that the ceiling of the mining shaft usually is less obstructed and/or less prone to changes in shape and/or profile than the walls or the bottom and/or floor of the mining shaft.

A preferred example can be an operation arrangement, where the first operation unit comprises two sensors, one for scanning the surroundings in a substantially horizontal direction and one for scanning the surroundings in a substantially vertical direction, where in the first transport unit preferably is a loading unit. In this example, it can be preferred that the second operation unit and/or some or all of the further operation units comprise only one sensor for scanning the surroundings in a substantially horizontal direction.

A further preferred example can be an operation arrangement, where the first and second operation units both comprise two sensors, one for scanning the surroundings in a substantially horizontal direction and one for scanning the surroundings in a substantially vertical direction, where in the first transport unit preferably is a loading unit and the second unit preferably is a discharge unit. In this example, it can be preferred that some or all of the further operation units positioned between the first and second operation units comprise only one sensor for scanning the surroundings in a substantially horizontal direction.

Further preferably, the operation arrangement is adapted to compare second scan results from the second sensor of the second operation unit with first scan results from the first sensor of the first operation unit, with the second scan results being obtained at a travel position of the second transport unit corresponding to a travel position of the first transport unit at which the first scan results were obtained.

It is further preferred that the operation arrangement is adapted to compare second scan results from the further sensor of the further operation unit with first scan results from the first sensor of the first operation and/or with second scan results from the second sensor of the second operation unit, with the further scan results being obtained at a travel position of the further transport unit corresponding to a travel position of the first transport unit at which the first scan results were obtained and/or a travel position of the second transport unit at which the second scan results were obtained.

In a further preferred embodiment, the first sensor and/or second sensor and/or further sensor is arranged at an angle to a substantially horizontal and/or to a substantially vertical plane. The angled arrangement of the first sensor and/or second sensor and/or further sensor has the advantage, that, in particular even with a 2-D scanner, scan results can comprise at least a section of the surroundings in a substantially horizontal as well as in a substantially vertical direction. For example, when the sensors are arranged at an angle of 45° to a substantially horizontal and/or to a substantially vertical plane, even with a 2-D scanner, the scanner results would cover surroundings in a horizontal direction as well as in a vertical direction due to the angled arrangement. The arrangement at an angle to a substantially horizontal and/or to a substantially vertical plane in particular means angles other than 0°, 360°, 90° or 0°. In particular, the arrangement at an angle to a substantially horizontal and/or to a substantially vertical plane can include angles between 30° and 60°, such as 45°, for example.

According to a preferred embodiment, the first operation unit is adapted for receiving data from a user interface and/or from a preceding device, in particular a cutting machine, in particular steering data for being guided along a travel path, and/or the second operation unit is adapted for receiving data from a user interface and/or from a further device in particular steering data for being guided along a travel path.

This embodiment is particularly preferred to steer the first operation unit, which is preferably located at a loading unit, into a mining shaft of an underground mining site. A user interface can be used, preferably, for receiving input from a user, such as a (human) operator. For example, by receiving data from a user interface, a user can steer the first operation unit into and along a mining shaft. In addition or as an alternative, the first operation unit can receive data from a preceding device, like a cutting machine. In this case, it is further preferred that the first operation unit can follow the preceding device along its path in particular into and along a mining shaft. For receiving data from such a preceding device, an interface adapted for such data exchange can be used.

The receipt of data from a user interface and/or from a preceding and/or further device can be employed in addition to or as an alternative to a substantially autonomous steering and/or navigation as described above. Such solutions can be particularly helpful when steering and/or navigating a mobile haulage system into and/or out of a mining shaft along a travel path.

Preferably, the mobile haulage arrangement is controlled by either one or two operators depending on which mode it is operating in. Preferably, interfaces like mobile control panels are located at each end of the mobile haulage arrangement, preferably at the loading unit and/or the discharge unit, to allow the operator/s to control the mobile haulage arrangement. Preferably, the controls are remote controlled (could be either cable or radio remote controlled).

Preferably, the operation arrangement is adapted to operate the mobile haulage arrangement in a number of different operating modes. The movement of the mobile haulage arrangement can also be referred to as tramming herein. A short summary of examples of these different preferred modes are:
1. Production Mode
   - In the production mode, tramming speed is limited to a predetermined maximum speed (preferably to a maximum value of 10 m/min or to a maximum value of 20 m/min). The operator is positioned on the front side close to the loading unit. From this position he is able to spot the material transfer and is able to steer the mobile haulage arrangement through the mine in order to follow the mining machine or drive the mobile haulage arrangement to the material load position. Tramming Reverse: In the tramming reverse, tramming speed is limited to a predetermined maximum speed (preferably to a maximum value of 10 m/min) in reverse speed. The operator is positioned on the front side close to the loading unit. The mobile haulage arrangement has recorded the way in and will follow the same path back out as the mobile haulage arrangement went in. No steering is required.
   - In conveyor operation.
   - Preferably, this is the typical operating mode of the mobile haulage arrangement.
2. Fast Tram Reverse
   - In fast tram reverse, tramming speed is limited to a predetermined maximum speed (preferably to a maximum value of 20 m/min) in reverse speed.
   - A fast speed activation requires two operators to initiate (one at each end).
   - The conveying element, in particular an enclosed belt, is not running.
3. Maintenance Mode
   - The maintenance mode is an out of sequence conveyor operation.
   - The maintenance mode comprises a manual reposition of crawler and/or wheel units and/or steering cylinders.
4. Belt Extension
   - The mobile haulage arrangement and a floor mounted receiving conveyor advance together as one unit.
5. Relocation
   - A fast tram forward/reverse speed, preferably at a maximum value of 20 m/min, requires two operators to initiate (one at each end).
   - Relocation means tramming the mobile haulage arrangement from one mining section to another mining section.
   - The conveying element, in particular an enclosed belt, is not running.
   - Automatic levelling is disabled.

Preferably, the operation arrangement acts as a control and navigations system, which can also be referred to as "guidance system", in order to maintain the correct position of the mobile haulage arrangement within the roadway or path in the mining shaft, respectively. For example, the operation arrangement can be responsible for controlling the proportional solenoids for crawler tracks of crawler units and the steering cylinders of the support structure connecting the different units.

For example, the operation arrangement preferably operates the mobile haulage arrangement in the following modes:
- Follow the Leader: This mode is preferred in cases where the wheel units and crawler units must follow the path taken by the loading unit within the roadway to within a predetermined range, for example +/- 500mm (with 750mm being a maximum deviation value, for example). The position in the roadway of the loading unit is recorded and used as a reference for the trailing units, like wheel units and crawler units, in both the advance and retract direction.
- Walking Blind: This mode is preferred in cases where the position of the loading unit is not known for any reason. Then the wheel units and crawler units are to follow the centre (or a predefined offset) of the roadway to +/-500mm (with 750mm being a maximum deviation value, for example).

In order for the operation arrangement to operate the mobile haulage arrangement correctly the following determinations are preferred:
- The position of one crawler unit or wheel unit is determined, through the use of position scanner devices.
- The position of the discharge unit is determined by external reference marks scanned by an on-board laser scanner.
- The angle of articulation of each of the steering cylinders is determined through the use of linear transducers in the steering cylinders. Preferably, and due to the deformation on the support structure and resulting tolerances, an independent measuring device, preferably a laser scanner and camera system, can be installed on different units at a certain distance in order to increase reliability and correctness. In this way, a high level of position information in the mining tunnel and the position of the neighbour unit in reference to the mounted unit can be obtained.

Further preferably, the amount of extension (or overlap - length or distance measurement) of the mobile haulage arrangement from the receiving conveyor can be measured and known to within +/- 500mm at all times during operation (with 750mm being a maximum deviation value, for example). This can be measured and determined with a suitable sensor. A suitable sensor could be, for example, a laser distance scanner, ultrasonic sensor, 2D laser scanner, or a 3D laser scanner mapping the surrounding and measuring the velocity and distance from the start point. This data will be recorded in the data base.

Preferably, the information from the sensors (preferably a position scanner camera system and displacement of steering cylinder) can be used to reconstruct the "shape" of the mobile haulage arrangement, for example, by forming an imaginary line above the mobile haulage arrangement.

The sensors of the operation arrangement preferably serve navigation purposes. Preferably, on a first unit and on a last unit of a mobile haulage arrangement two or more sensors, preferably laser scanners, per side are installed. Preferably, the scanning will be performed vertical and horizontal to scan floor rib and roof. Preferably, between the first unit and the last unit further sensors are installed, which are preferably equally spaced (e.g. every 25m, with 25m being the distance between two sensors). Preferably, the sensors will be installed as a pair (one left and one right on a unit). Further preferably, the scanning will work vertical and/or horizontal depending on the mounting position. Preferably, parts of the floor rib and roof can be scanned. The roof of a mining shaft is particularly preferred since it is least likely to change during development in underground mining. The floor of a mining shaft can also be used, but bears the risk that it can be obstructed at least partly, e.g. it could be used to store consumptions, park underground vehicles, etc. The rib of a mining shaft can be continuous and also can be used as a reference. However, the sensors would need to be adapted to ignore crossings, people, and other exceptions. For example, the ribs of a mining shaft can get interrupted repeatedly, in particular in room and pillar mining.

For example, the first support unit, preferably the loading unit, can be controlled and steered by an operator.

Preferably, the sensor on the first unit, in particular the loading unit, will scan or map the surroundings and determine the position of the first unit in the roadway at that specific tramming distance or travel position in the sense of covered distance. Preferably, this data will be recorded or stored.

Further preferably, the position of the loading unit within the roadway at regular intervals of advance from the receiving conveyor will be recorded or stored. When the next transport unit with a sensor, preferably an on-board scanner, is approaching this location the operation unit of this next transport unit is cross checking the actual position with the previous measured position of the first unit, preferably the loading unit what should be the target position. It is then preferred to calculate the error in the position of the transport unit based on the current actual position and the recorded position of the loading unit. Subsequently, it is preferred to calculate what adjustment is required for the transport units, which can be then realized into steering signals using a combination of crawler track speed logic and steering cylinder logic.

Preferably, all necessary adjustments are made when the mobile haulage arrangement is next advanced or retracted.

Preferably, a support structure provides the connection between the transport units, in particular between the loading unit, crawler units, wheel units, and discharge unit. Preferably, the support structure is a framework structure and further preferably comprises three parts or segments. The middle segment preferably can pivot horizontal. Preferably, the horizontal movements of the segments of the support structure are controlled by cylinders. Preferably, by measuring the cylinder stroke the position and the angle of the support units in relation to each other can be calculated.

Preferably, the front end segment is able to pivot vertical in order to allow a vertical compensation between the support structures. The rear end segment preferably has a universal joint to compensate twisting between adjacent structures.

In a further preferred embodiment, the second operation unit and/or the further operation unit are adapted to exchange data with the first operation unit; the second operation unit and/or the further operation unit are adapted to estimate and/or determine and/or receive a scanning instruction, including in particular a next time instance (deltaT) and/or a next distance increment, for performing a scanning operation of the surroundings; the second operation unit and/or the further operation unit are adapted to scan the surroundings according to the scanning instruction; the second operation unit and/or the further operation unit are adapted to process the scan results.

Herein, the data exchange between the operation units can comprise profile data, in particular data about the profile of the surroundings. A scanning instruction can refer to the instruction to a sensor to scan the surroundings, in particular for data, such as profile data.

The processing of the scan results preferably comprises determining whether the second operation unit and/or the further operation unit are in their target positions or not and possibly, and further preferred, determining correction steering signals, if necessary.

A further preferred embodiment of the operation arrangement comprises a reference station arranged and adapted for sending and/or receiving a positioning signal to and/or from the first operation unit and/or the second operation unit and/or the further operation unit in order to determine the position of the first operation unit and/or the second operation unit and/or the further operation unit.

Preferably, information and/or signals relating to the position can comprise information about the travel position, covered distance. Further, this embodiment can serve to calibrate operation units and/or transport units with respect to position information. It is advantageous, when the exact position of the reference station is known. Preferably, the operation units send and/or receive a positioning signal to or from the reference station in order to determine their exact position, e.g. travel position, and/or calibrate their position as a basis for further determining future positions in relation thereto. The reference station can comprise a photoelectric barrier and/or a proximity sensor and/or a flag to be passed. In particular, the position with respect to the travel position and/or covered distance along a travel path is of particular interest. Preferably, the reference station can be arranged and adapted for sending and/or receiving a velocity signal to and/or from the operation units and/or for determining a velocity of the operation units.

According to a further preferred embodiment the operation arrangement, in particular the first operation unit and/or the second operation unit and/or the further operation unit, is adapted to determine and preferably store and/or process data relating to position and/or velocity and/or acceleration and/or slowing down and/or change of direction and/or extension or retraction of a steering cylinder of a transport unit and/or a hydraulic cylinder of a conveyor support structure; and/or is adapted to determine and preferably store and/or process and/or output a respective current position of the first operation unit and/or the second operation unit and/or the further operation unit based on the determined position and data. For example, this embodiment can allow determining and/or storing a position at a certain time instance, e.g. the current position, of some or all of the operation units and/or some or all of the transport units and/or parts of or the whole mobile haulage system. This determination in storage can be used, for example, to steer the mobile haulage system out of the mining shaft along a path corresponding to the path on which the mobile haulage system entered the mining shaft.

According to a further aspect of the invention, the object is solved by a mobile haulage arrangement for continuously conveying fragmented material in a conveying direction, the haulage arrangement comprising a loading unit comprising a material transfer unit for receiving fragmented material, the material transfer unit comprising a material transfer structure arranged at a transport unit; a discharge unit comprising a material transfer unit for discharging fragmented material, the material transfer unit comprising a material transfer structure arranged at a transport unit; a conveying element for conveying fragmented material, in particular a belt of an enclosed belt or pocket conveyor; an operation arrangement described herein. Preferably, the first operating unit is arranged at the loading unit, the second operation unit is arranged at the discharge unit. It is further preferred that the mobile haulage arrangement further comprises at least one further transport unit arranged between the loading unit and the discharge unit; wherein further preferably at least one further operating unit is arranged at the at least one further transport unit.

According to a further aspect of the invention, the object is solved by a method for operating a mobile haulage arrangement for continuously conveying fragmented material in a conveying direction described herein, the method comprising providing a mobile haulage arrangement described herein; scanning at least a section of the surroundings in a two-dimensional manner substantially parallel to the conveying direction, in particular a section of more than 90°, preferably a section of 180° or more than 180°, e.g. 205°, or in a three-dimensional manner with the first sensor arranged at the first transport unit; scanning at least a section of the surroundings in a two-dimensional manner substantially parallel to the conveying direction, in particular a section of more than 90°, preferably a section of 180° or more than 180°, e.g. 205°, or in a three-dimensional manner with the second sensor arranged at the second transport unit; comparing second scan results from the second sensor of the second operation unit with first scan results from the first sensor of the first operation unit, with the second scan results being obtained at a travel position of the second transport unit corresponding to a travel position of the first transport unit at which the first scan results were obtained, the comparison of the scan results allows to monitor, to control and/or to correct the navigation and/or steering and/or movement of the first transport unit and/or the second transport unit and/or the entire mobile haulage arrangement.

Preferably, the method further comprises scanning at least a section of the surroundings in a two-dimensional manner substantially parallel to the conveying direction, in particular a section of more than 90°, preferably a section of 180° or more than 180°, e.g. 205°, or in a three-dimensional manner with at least one further sensor arranged at the at least one further transport unit.

In a preferred embodiment of the method, second scan results from the further sensor of the further operation unit are compared with first scan results from the first sensor of the first operation and/or with second scan results from the second sensor of the second operation unit, with the further scan results being obtained at a travel position of the further transport unit corresponding to a travel position of the first transport unit at which the first scan results were obtained and/or a travel position of the second transport unit at which the second scan results were obtained.

In particular, it is preferred that the method comprises deriving a position information and/or a position correction signal from the result of the comparison.

According to a further preferred embodiment the method comprises generating a steering signal comprises generating a target position and/or a target velocity and/or a current position and/or a current velocity and/or an acceleration signal and/or a brake signal and/or a signal indicating a change of direction and/or drive signal for a crawler track of a transport unit adapted as a crawler unit and/or a signal for extending or retracting a steering cylinder of a transport unit and/or a hydraulic cylinder of a conveyor support structure.

It is further preferred that the method comprises exchanging data between the first operation unit and/or the second operation unit and/or the at least one further operation unit; and generating a steering signal for steering the first operation unit and/or the second operation unit and/or the at least one further operation unit and steering the first operation unit and/or the second operation unit and/or the at least one further operation unit according to the steering signal. In particular, it is preferred that the second and/or the further operation unit receive data from the first operation unit and/or a preceding operation unit and/or send data to a subsequent operation unit, wherein the data preferably comprises information about a distance from the second operation unit, preferably the discharge unit.

According to a further preferred embodiment, the method comprises scanning at least a section of the surroundings orthogonal to the conveying direction, preferably at least a section above a horizontal plane, in particular a section of more than 90° or more than 180° or more than 180°, e.g. 205°, with at least one sensor arranged at the first operation unit and/or the second operation unit and/or the further operation unit. Again, it is preferred that second scan results from the second and/or further sensor of the second and/or further operation unit are compared with first scan results from the first sensor of the first operation and/or with second scan results from the second sensor of the second operation unit, with the second and/or further scan results being obtained at a travel position of the further transport unit corresponding to a travel position of the first transport unit at which the first scan results were obtained and/or a travel position of the second transport unit at which the second scan results were obtained. In particular, it is preferred that the method comprises deriving a position information and/or a position correction signal from the result of the comparison

It is further preferred that the method comprises receiving data from a user interface and/or from a preceding device, in particular a cutting machine, in particular steering data for being guided along a travel path.

Further preferably, the method comprises steering the loading unit according to a steering signal generated from an input from the user interface of first operation unit.

According to a preferred embodiment of the method, the second operation unit and/or the further operation unit exchange data with the first operation unit; the second operation unit and/or the further operation unit estimate and/or determine and/or receive a scanning instruction, including in particular a next time instance (deltaT) and/or a next distance increment, for performing a scanning operation of the surroundings; the second operation unit and/or the further operation unit scan the surroundings according to the scanning instruction; the second operation unit and/or the further operation unit process the scan results.

It is further preferred that the method comprises determining the position of the first operation unit and/or the second operation unit and/or the at least one further operation unit at a reference station.

According to a further embodiment, the method preferably comprises determining and preferably storing and/or processing data relating to position and/or velocity and/or acceleration and/or slowing down and/or change of direction and/or extension or retraction of a steering cylinder of a transport unit and/or a hydraulic cylinder of a conveyor support structure; and/or determining and preferably storing and/or processing and/or outputting a respective current position of the first operation unit and/or the second operation unit and/or the at least one further operation unit based on the determined position and data.

As to the advantages, preferred embodiments and details of these further aspects and preferred embodiments, reference is made to the corresponding aspects and embodiments described above.

Preferred embodiments of the invention shall now be described with reference to the attached drawings, in which
- Fig. 1:: shows a perspective view of a mobile haulage arrangement;
- Fig. 2:: shows perspective view of a mobile haulage arrangement in a straight alignment;
- Fig. 3:: shows a perspective view of a loading unit with horizontal and vertical scanning angles;
- Fig. 4:: shows a different perspective view of a loading unit with horizontal and vertical scanning angles;
- Fig. 5:: shows a different view of a loading unit with horizontal and vertical scanning angles;
- Fig. 6:: shows a top view of a loading unit with horizontal and vertical scanning angles;
- Fig. 7:: shows a perspective view of two transportation units and a support structure mounted therebetween; and
- Fig. 8:: shows a detailed perspective view of the support structure according to Fig. 7.

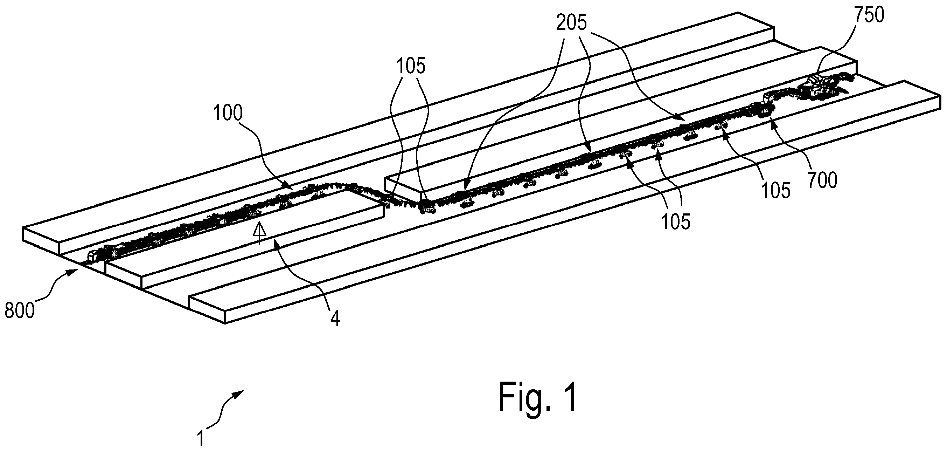

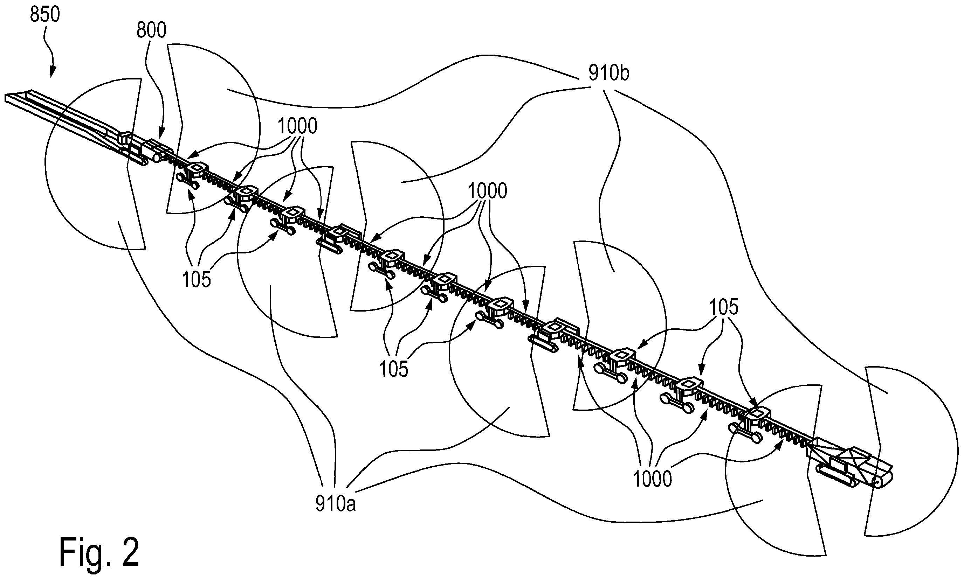

In Figs. 1 and 2 perspective views of a mobile haulage arrangement 1 is shown. The mobile haulage arrangement 1 comprises a loading unit 700 on a mining location, next to a mining device 750, for example a cutting machine, a discharge unit 800 on a discharge location, and several transport units 100, arranged between the loading unit 700 and the discharge unit 800. The mobile haulage arrangement 1 is located inside a mine and is connecting the mining location with the discharge location along a path through the mining shafts. The transport units 100 can either be wheel units 105 or crawler units 205, keeping the mobile haulage arrangement 1 movable within the mining shafts. As can be seen from Fig. 1, the mobile haulage arrangement is able to bend around corners within the mine, following a path through the mining shafts. Because of the modularity of the arrangement, different setups of wheel units and crawler units are possible.

In Fig. 2, vertical scanning angles 910b are indicated as well as support structures between the transportation units 1000, namely between the crawler units 205 and the wheel units 105. Further, in Fig. 2 a discharge arrangement 850 for discharging fragmented material from the discharge unit 802 a further conveying system or the like is depicted. In addition to or instead of sensors for vertical scanning as indicated by vertical scanning angles 910b, operation units can have sensors for vertical scanning. It is particularly preferred that a first and the last transport unit of a mobile haulage arrangement, usually the loading unit and the discharge unit, have sensors for both vertical and horizontal scanning, while the transferred units between the first and the last transport unit have sensors only for vertical or horizontal scanning.

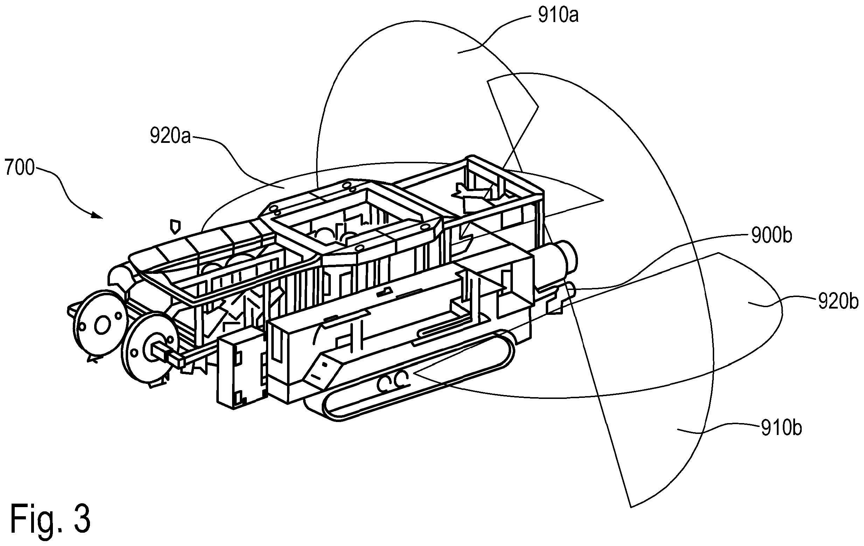

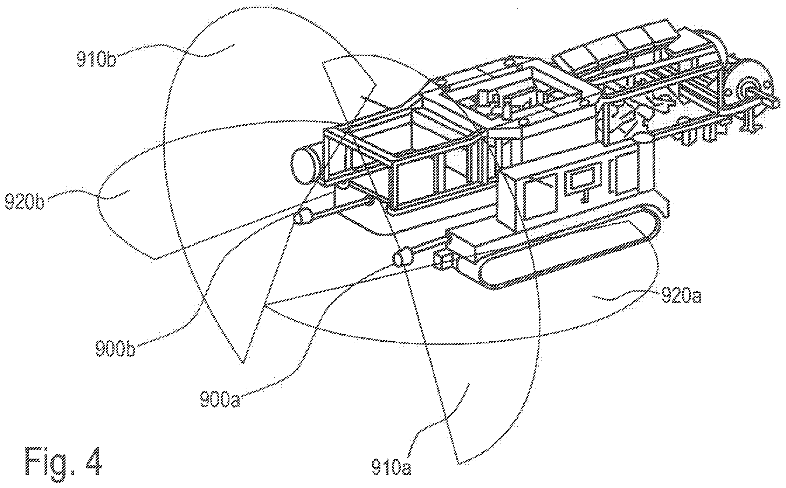

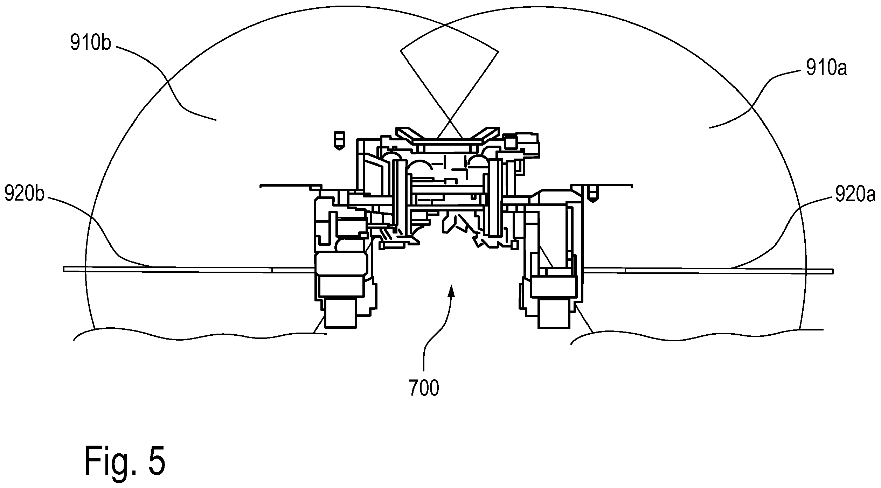

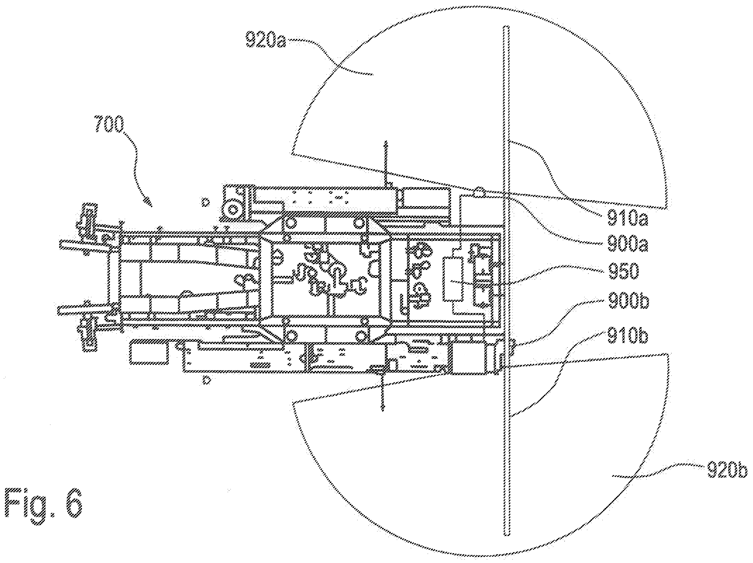

Figs. 3-6 show different views of the loading unit with an operation unit 950 (see Fig. 6) comprising sensors 900a,b on opposite sides of the loading unit 700 and with vertical scanning angles 910a,b and horizontal scanning angles 920a,b indicated. Herein, sensor 900a comprises a 2-D laser scanner arranged for scanning along vertical scanning angle 910a and a 2-D laser scanner arranged for scanning along horizontal scanning angle 920a.

Sensor 900b comprises a 2-D laser scanner arranged for scanning along vertical scanning angle 910b and a 2-D laser scanner arranged for scanning along horizontal scanning angle 920b. However, alternatives are possible. In particular, a 2-D laser scanner arranged at an angle to a substantially horizontal plane and to a substantially vertical plane can be used for scanning horizontal as well as vertical sections of the surroundings. Further, a 3-D laser scanner can be used.

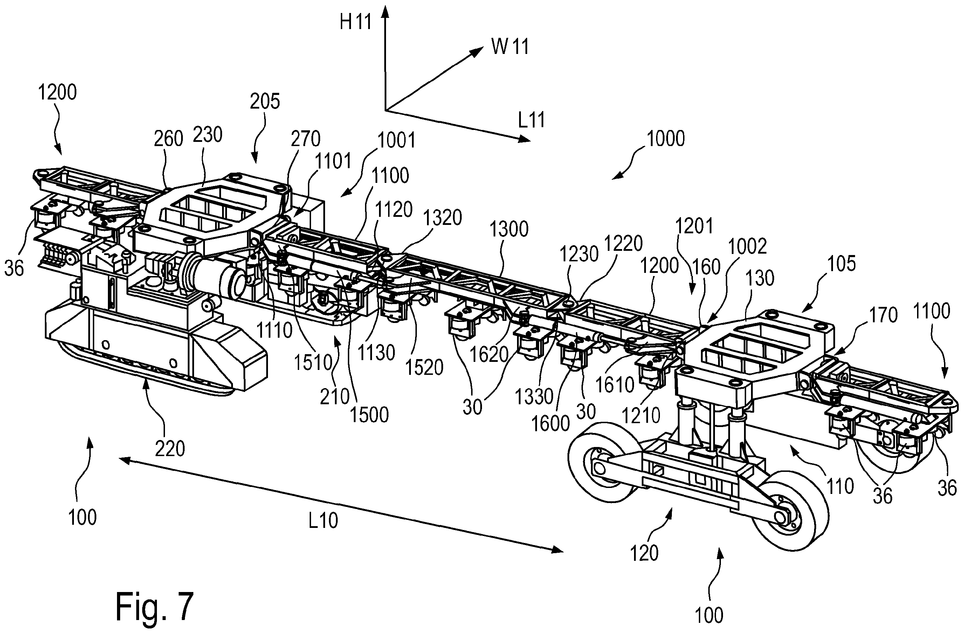

Fig. 7 shows a perspective view of two transportation units 100, namely a wheel unit 105 and a crawler unit 205, and a support structure 1000 mounted therebetween. The support structure 1000 extends between a first end 1001 and a second end 1002 and comprises a first end element 1100 with a main extension in a longitudinal direction L11, a width extension in a width direction W11 orthogonal to the longitudinal direction L11 and a height extension in a height direction H11 orthogonal to the longitudinal direction L11 and the width direction W11. The support structure further comprises a second end element 1200 with a main extension in a longitudinal direction L11, a width extension in a width direction W11 orthogonal to the longitudinal direction L11 and a height extension in a height direction H11 orthogonal to the longitudinal direction L11 and the width direction W11. The support structure also comprises a link element 1300 with a main extension in a longitudinal direction L11, a width extension in a width direction W11 orthogonal to the longitudinal direction L11 and a height extension in a height direction H11 orthogonal to the longitudinal direction L11 and the width direction W11.

The first end element 1100, the second end element 1200 and the link element 1300 all comprise a framework structure, with longitudinal and width extension exceeding the height extension. The support structure further comprises a plurality of guide assemblies 30 for engaging opposite longitudinal edges of a belt of an enclosed belt conveyor, which can be, for example, full guide assemblies 36. In this embodiment, there are guide assemblies arranged at the first end element 1100, the second end element 1200 as well as the link element 1300. The first end element 1100 and the second end element 1200 both have an outer end 1101, 1201, respectively. Both outer ends 1101, 1201 comprise end connectors 1110, 1210, the first end connector 1110 and the second end connector 1210, respectively. The first and second end connectors 1110, 1210 both are adapted to form a connection with a transport unit 100, 105, 205.

In the shown embodiment, the first end connector 1110 has a ring-shaped form and engages with the bar-shaped form of the connector 270 of the crawler unit 205. Respectively, the second end connector 1210 forms a connection in the same way with the connector 160 of the wheel unit 105. On the opposite side of the crawler unit 205 in a longitudinal direction L11 another second end element 1200 is arranged and connected with the connector 260 of the crawler unit, while on the opposite side of the wheel unit 105 in a longitudinal direction L11 another first end element 1100 is arranged and connected with the connector 170 of the wheel unit.

It has to be understood that the transport units can be interchanged due to the modular setup of the mobile haulage arrangement to adapt to certain requirements. The connection formed between the first end connector 1110 and the connector 270 of the crawler unit 205 is adapted to allow for a rotation about an axis parallel to the width direction W11 and about an axis parallel to the longitudinal direction L11. The connection formed between the second end connector 1210 and the connector 160 of the wheel unit 105 is adapted to allow for a rotation about an axis parallel to the width direction W11. The first end element 1100 and the second end element 1200 both have an inner connector 1120, 1220, respectively, while the link element 1300 has two inner connectors 1320, 1330 on opposite ends of the link element 1300 in a longitudinal direction L11.

In this embodiment the inner connector 1120 of the first end element 1100 forms a connection with one of the end connectors 1320 of the link element 1300 while the inner connector 1220 of the second end element 1200 forms a connection with the other, opposite inner connector 1330 of the link element. Both connections allow for a rotation about an axis parallel to the height direction H11 and are supported by a connecting pin 1130, 1230 of the first and second end element 1100, 1200, respectively.

In this embodiment, the first end connector 1110 is fixed against a rotation about an axis parallel to the height direction H11, the second end connector 1210 is fixed against a rotation about an axis parallel to the height direction H11 and against a rotation about an axis parallel to the longitudinal direction L11, and the inner connectors 1120, 1220, 1320, 1330 are fixed against a rotation about an axis parallel to the width direction W11 and an axis parallel to the longitudinal direction L11, respectively.

Between the first end element 1100 and the link element 1300 as well as between the second end element 1200 and the link element, a first and second telescopic element 1500, 1600 are arranged, respectively. The first telescopic element 1500 is mounted on the first side to a first telescopic mounting element 1510, being arranged at the first end element 1100, and on the second side to a second telescopic mounting element 1520, being arranged at the link element 1300. Accordingly, the second telescopic element 1600 is mounted on the first side to a first telescopic mounting element 1610, being arranged at the second end element 1200, and on the second side to a second telescopic mounting element 1620, being arranged at the link element 1300.

The first and second telescopic elements 1500, 1600 are each adapted as a hydraulic cylinder, preferably being powered by a hydraulic valve block, being arranged at either one or both of the wheel unit and/or the crawler unit. The first and second telescopic elements 1500, 1600 are further arranged to control a rotational movement about the inner connectors 1120, 1220, of the first and second end elements 1100, 1200, respectively. Further, the first and second telescopic elements 1500, 1600 are adapted to register a distance by which it is retracted and/or extended.

As can be seen from this embodiment, the first telescopic element 1500 is bridging the connection formed between the two inner connectors 1120, 1320 of the first end element 1100 and the link end element 1300 and the second telescopic element 1600 is bridging the connection formed between the two inner connectors 1220, 1330 of the second end element 1200 and the link element 1300. The overall length of the support unit L10 is about 6m.

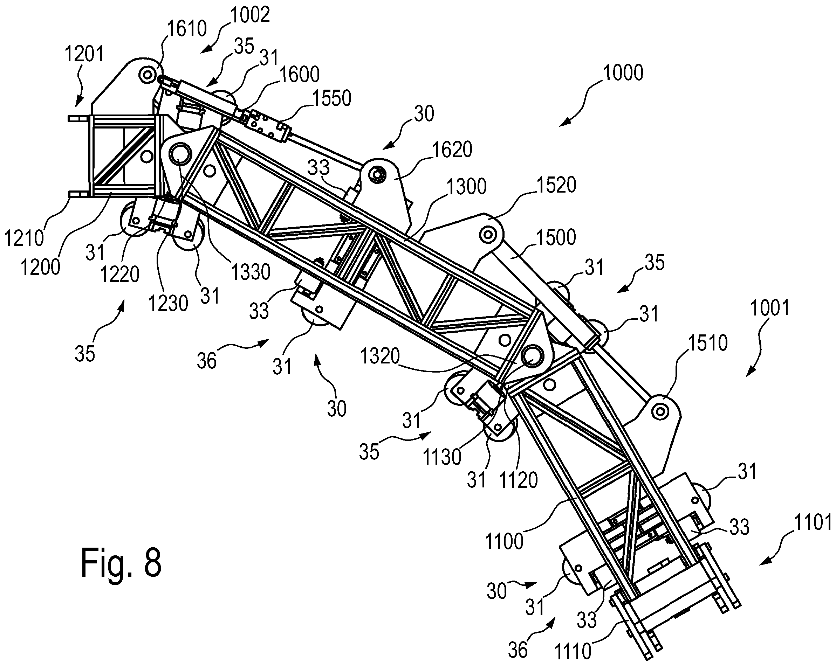

Fig. 8 shows a detailed perspective view of the support structure 1000 according to Fig. 7. Here it can be seen, that the guide assemblies 30 are adapted as full guide assemblies 36, comprising two opposite side guide rollers 31, a top guide roller 33 and a lower guide roller 32 for engaging the belt of an enclosed belt conveyor.

### List of Reference Signs

- 1: mobile haulage arrangement
- 4: fragmented material
- 30: guide assembly
- 31: side guide roller
- 33: top guide roller
- 35: double guide assembly
- 36: full guide assembly
- 100: transport unit
- 105: wheel unit
- 110, 120: ground transportation structure of wheel unit
- 130: support frame of wheel unit
- 160, 170: connector of wheel unit
- 205: crawler unit
- 210, 220: ground transportation structure of crawler unit
- 230: support frame of crawler unit
- 260,270: connector
- 700: loading unit
- 750: cutting machine
- 800: discharge unit
- 850: discharge arrangement
- 900a, b: scanning sensors
- 910a, b: vertical scanning angles
- 920a,b: horizontal scanning angles
- 950: operation unit
- 1000: support structure
- 1001: first end of support structure
- 1002: second end of support structure
- 1100: first end element
- 1101: outer end of first end element
- 1110: first end connector
- 1120: inner connector of first end element
- 1130: connecting pin of first end element
- 1200: second end element
- 1201: outer end of second end element
- 1210: second end connector
- 1220: inner connector of second end element
- 1230: connecting pin of second end element
- 1300: link element
- 1320, 1330: inner connector of link element
- 1500: first telescopic element
- 1510: first telescopic mounting element
- 1520: second telescopic mounting element
- 1550: telescopic element control unit
- 1600: second telescopic element
- 1610: first telescopic mounting element
- 1620: second telescopic mounting element
- H11: height direction
- L10: length of support structure
- L11: longitudinal direction
- W11: width direction

## Claims

1. Operation arrangement for operating a mobile haulage arrangement (1) in an underground mining site for continuously conveying fragmented material in a conveying direction, comprising
- a first operation unit (950) arranged at a first transport unit (100, 105, 205, 700, 800) of the mobile haulage arrangement (1), and adapted for exchanging, storing and processing data and for generating a steering signal for steering the first transport unit;
- a second operation unit (950) arranged at a second transport unit (100, 105, 205, 700, 800) of the mobile haulage arrangement (1), and adapted for exchanging, storing and processing data and for generating a steering signal for steering the second transport unit; **characterized by**
- the first operation unit (950) further comprising at least one first sensor (900a, 900b) arranged and adapted to scan at least a section of the surroundings in a two-dimensional manner substantially parallel to the conveying direction, in particular a section of more than 90°, preferably a section of 180°, or in a three-dimensional manner;
- the second operation unit (950) further comprising at least one second sensor (900a, 900b) arranged and adapted to scan at least a section of the surroundings in a two-dimensional manner substantially parallel to the conveying direction, in particular a section of more than 90°, preferably a section of 180°, or in a three-dimensional manner;
- and wherein the operation arrangement is adapted to compare second scan results from the second sensor of the second operation unit with first scan results from the first sensor of the first operation unit, with the second scan results being obtained at a travel position of the second transport unit corresponding to a travel position of the first transport unit at which the first scan results were obtained, the comparison of the scan results allows to monitor, to control and/or to correct the navigation and/or steering and/or movement of the first transport unit (100) and/or the second transport unit (105) and/or the entire mobile haulage arrangement (1).

2. Operation arrangement according to claim 1, wherein at least one further operation unit (950) is arranged at a further transport unit (205) of the mobile haulage arrangement (1), and adapted for exchanging, storing and processing data and for generating a steering signal for steering the further transport unit (205).

3. Operation arrangement according to at least one of the previous claims, wherein the at least one first and/or second sensor (900a, 900b) is arranged and adapted to scan at least a section of the surroundings substantially orthogonal to the conveying direction, preferably at least a section above a horizontal plane, in particular a section of more than 90° or more than 180°, in a two-dimensional manner or in a three-dimensional manner.

4. Operation arrangement according to at least one of the previous claims, wherein the first sensor and/or second sensor is arranged at an angle to a substantially horizontal plane, the arrangement at an angle to a substantially horizontal plane means an angle other than 0°.

5. Operation arrangement according to at least one of the previous claims, wherein the first operation unit (950) is adapted for receiving data from a user interface and/or from a preceding device, in particular a cutting machine, in particular steering data for being guided along a travel path.

6. Operation arrangement according to at least one of the previous claims, wherein
- the second operation unit (950) is adapted to exchange data with the first operation unit;
- the second operation unit is adapted to estimate and/or determine and/or receive a scanning instruction, including in particular a next time instance (deltaT) and/or a next distance increment, for performing a scanning operation of the surroundings;
- the second operation unit is adapted to scan the surroundings according to the scanning instruction;
- the second operation unit is adapted to process the scan results.

7. Operation arrangement according to at least one of the previous claims, comprising a reference station arranged and adapted for sending and/or receiving a positioning signal to and/or from the first operation unit and/or the second operation unit in order to determine the position of the first operation unit (100) and/or the second operation unit (105).

8. Operation arrangement according to at least one of the previous claims, wherein the operation arrangement,
- is adapted to determine and preferably store and/or process data relating to position and/or velocity and/or acceleration and/or slowing down and/or change of direction and/or extension or retraction of a steering cylinder of a transport unit and/or a hydraulic cylinder of a conveyor support structure; and/or
- is adapted to determine and preferably store and/or process and/or output a respective current position of the first operation unit and/or the second operation unit based on the determined position and data.

9. Mobile haulage arrangement (1) for continuously conveying fragmented material in a conveying direction, the haulage arrangement comprising
- a loading unit (700) comprising a material transfer unit for receiving fragmented material, the material transfer unit comprising a material transfer structure arranged at a transport unit;
- a discharge unit (800) comprising a material transfer unit for discharging fragmented material, the material transfer unit comprising a material transfer structure arranged at a transport unit;
- at least one further transport unit (100, 105, 205) arranged between the loading unit (700) and the discharge unit (800);
- a conveying element for conveying fragmented material, in particular a belt of an enclosed belt or pocket conveyor;
- an operation arrangement according to at least one of the previous claims, wherein the first operating unit (950) is arranged at the loading unit, the second operation unit is arranged at the discharge unit and at least one further operating unit is arranged at the at least one further transport unit.

10. Method for operating a mobile haulage arrangement (1) in an underground mining site for continuously conveying fragmented material in a conveying direction according to claim 9, the method comprising
- providing a mobile haulage arrangement (1) according to claim 9;
**characterized by**
- scanning at least a section of the surroundings in a two-dimensional manner substantially parallel to the conveying direction, in particular a section of more than 90°, preferably a section of 180°, or in a three-dimensional manner with the first sensor arranged at the first transport unit;
- scanning at least a section of the surroundings in a two-dimensional manner substantially parallel to the conveying direction, in particular a section of more than 90°, preferably a section of 180°, or in a three-dimensional manner with the second sensor arranged at the second transport unit;
- comparing second scan results from the second sensor of the second operation unit with first scan results from the first sensor of the first operation unit, with the second scan results being obtained at a travel position of the second transport unit corresponding to a travel position of the first transport unit at which the first scan results were obtained, the comparison of the scan results allows to monitor, to control and/or to correct the navigation and/or steering and/or movement of the first transport unit (100) and/or the second transport unit (105) and/or the entire mobile haulage arrangement (1).

11. Method according to claim 10, comprising scanning at least a section of the surroundings orthogonal to the conveying direction, preferably at least a section above a horizontal plane, in particular a section of more than 90° or more than 180° with the at least one sensor arranged at the first operation unit and/or the second operation unit and/or a further operation unit.

12. Method according to at least one of claims 10 to 11, comprising
- receiving data from a user interface and/or from a preceding device, in particular a cutting machine, in particular steering data for being guided along a travel path.

13. Method according to at least one of claims 10 to 12, wherein
- the second operation unit (950) exchanges data with the first operation unit;
- the second operation unit (950) estimates and/or determines and/or receives a scanning instruction, including in particular a next time instance (deltaT) and/or a next distance increment, for performing a scanning operation of the surroundings;
- the second operation unit (950) scans the surroundings according to the scanning instruction;
- the second operation unit processes the scan results.

14. Method according to at least one of claims 10 to 13, comprising determining the position of the first operation unit (950) and/or the second operation unit at a reference station.

15. Method according to at least one of claims 10 to 11, comprising
- determining and preferably storing and/or processing data relating to position and/or velocity and/or acceleration and/or slowing down and/or change of direction and/or extension or retraction of a steering cylinder of a transport unit and/or a hydraulic cylinder of a conveyor support structure; and/or
- determining and preferably storing and/or processing and/or outputting a respective current position of the first operation unit and/or the second operation unit based on the determined position and data.

## Patentansprüche

1. Bedienanordnung zum Bedienen einer mobilen Förderanordnung (1) in einem untertägigen Bergbau um kontinuierlichen Befördern von gebrochenem Material in einer Beförderrichtung, umfassend
- eine erste Bedieneinheit (950), die an einer ersten Transporteinheit (100, 105, 205, 700, 800) der mobilen Förderanordnung (1) angeordnet ist und zum Austauschen, Speichern und Verarbeiten von Daten und zum Erzeugen eines Lenksignals zum Lenken der ersten Transporteinheit angepasst ist;
- eine zweite Bedieneinheit (950), die an einer zweiten Transporteinheit (100, 105, 205, 700, 800) der mobilen Förderanordnung (1) angeordnet ist und zum Austauschen, Speichern und Verarbeiten von Daten und zum Erzeugen eines Lenksignals zum Lenken der zweiten Transporteinheit angepasst ist;
**gekennzeichnet durch**
- die erste Bedieneinheit (950) ferner umfassend mindestens einen ersten Sensor (900a, 900b), der angeordnet und angepasst ist, um mindestens einen Abschnitt der Umgebung zweidimensional im Wesentlichen parallel zu der Beförderrichtung, insbesondere einen Abschnitt von mehr als 90°, vorzugsweise einen Abschnitt von 180° oder dreidimensional abtastet;
- die zweite Bedieneinheit (950) ferner umfassend mindestens einen zweiten Sensor (900a, 900b), der angeordnet und angepasst ist, um mindestens einen Abschnitt der Umgebung im Wesentlichen parallel zu der Beförderrichtung, insbesondere einen Abschnitt von mehr als 90°, vorzugsweise einen Abschnitt von 180° oder in einer dreidimensionalen Weise abtastet;
- und wobei die Bedienanordnung angepasst ist, um zweite Abtastergebnisse von dem zweiten Sensor der zweiten Bedieneinheit mit ersten Abtastergebnissen von dem ersten Sensor der ersten Bedieneinheit zu vergleichen, wobei die zweiten Abtastergebnisse an einer Fahrposition der zweiten Transporteinheit erhalten werden, die einer Fahrposition der ersten Transporteinheit entspricht, an der die ersten Abtastergebnisse erhalten wurden, wobei der Vergleich der Abtastergebnisse ermöglicht, die Navigation und/oder Lenkung und/oder Bewegung der ersten Transporteinheit (100) und/oder der zweiten Transporteinheit (105) und/oder der gesamten mobilen Förderanordnung (1) zu überwachen, zu steuern und/oder zu korrigieren.

2. Bedienanordnung nach Anspruch 1, wobei mindestens eine weitere Bedieneinheit (950) an einer weiteren Transporteinheit (205) der mobilen Förderanordnung (1) angeordnet ist, und zum Austauschen, Speichern und Verarbeiten von Daten und zum Erzeugen eines Lenksignals zum Lenken der weiteren Transporteinheit (205) angepasst ist.

3. Bedienanordnung nach mindestens einem der vorstehenden Ansprüche, wobei der mindestens eine erste und/oder zweite Sensor (900a, 900b) angeordnet und angepasst ist, um mindestens einen Abschnitt der Umgebung im Wesentlichen orthogonal zur Beförderrichtung, vorzugsweise mindestens einen Abschnitt oberhalb einer horizontalen Ebene, insbesondere einen Abschnitt von mehr als 90° oder mehr als 180°, zweidimensional oder dreidimensional abzutasten.

4. Bedienanordnung gemäß mindestens einem der vorstehenden Ansprüche, wobei der erste Sensor und/oder der zweite Sensor in einem Winkel zu einer im Wesentlichen horizontalen Ebene angeordnet ist, wobei die Anordnung in einem Winkel zu einer im Wesentlichen horizontalen Ebene einen anderen Winkel als 0° bedeutet.

5. Bedienanordnung nach mindestens einem der vorstehenden Ansprüche, wobei die erste Bedieneinheit (950) zum Empfangen von Daten von einer Benutzerschnittstelle und/oder von einer vorhergehenden Vorrichtung, insbesondere einer Schneidemaschine, insbesondere von Lenkdaten zum Führen entlang eines Fahrwegs, angepasst ist.

6. Bedienanordnung nach mindestens einem der vorstehenden Ansprüche, wobei
- die zweite Bedieneinheit (950) angepasst ist, um Daten mit der ersten Bedieneinheit auszutauschen;
- die zweite Bedieneinheit angepasst ist, um eine Abtastanweisung zu schätzen und/oder zu bestimmen und/oder zu empfangen, einschließlich insbesondere einer nächsten Zeitinstanz (deltaT) und/oder eines nächsten Abstandsinkrements, um einen Abtastvorgang der Umgebung durchzuführen;
- die zweite Bedieneinheit angepasst ist, um die Umgebung gemäß der Abtastanweisung abzutasten;
- die zweite Bedieneinheit angepasst ist, um die Abtastergebnisse zu verarbeiten.

7. Bedienanordnung nach mindestens einem der vorstehenden Ansprüche, umfassend eine Referenzstation, die zum Senden und/oder Empfangen eines Positioniersignals an und/oder von der ersten Bedieneinheit und/oder der zweiten Bedieneinheit angeordnet und angepasst ist, um die Position der ersten Bedieneinheit (100) und/oder der zweiten Bedieneinheit (105) zu bestimmen.

8. Bedienanordnung nach mindestens einem der vorstehenden Ansprüche, wobei die Bedienanordnung,
- angepasst ist, um Daten zu bestimmen und vorzugsweise zu speichern und/oder zu verarbeiten, die sich auf Position und/oder Geschwindigkeit und/oder Beschleunigung und/oder Verlangsamung und/oder Richtungsänderung und/oder Ausfahren oder Einfahren eines Lenkzylinders einer Transporteinheit und/oder eines Hydraulikzylinders einer Beförderunterstützungsstruktur beziehen; und/oder
- angepasst ist, um basierend auf der bestimmten Position und Daten eine jeweilige aktuelle Position der ersten Bedieneinheit und/oder der zweiten Bedieneinheit zu bestimmen und vorzugsweise zu speichern und/oder zu verarbeiten und/oder auszugeben.

9. Mobile Förderanordnung (1) zum kontinuierlichen Befördern von gebrochenem Material in einer Beförderrichtung, wobei die Förderanordnung umfasst:
- eine Beladeeinheit (700), die eine Materialtransfereinheit zum Aufnehmen von gebrochenem Material umfasst, wobei die Materialtransfereinheit eine Materialtransferstruktur umfasst, die an einer Transporteinheit angeordnet ist;
- eine Entladeeinheit (800), die eine Materialtransfereinheit zum Entladen von gebrochenem Material umfasst, wobei die Materialtransfereinheit eine Materialtransferstruktur umfasst, die an einer Transporteinheit angeordnet ist;
- mindestens eine weitere Transporteinheit (100, 105, 205), die zwischen der Beladeeinheit (700) und der Entladeeinheit (800) angeordnet ist;
- ein Beförderelement zum Befördern von gebrochenem Material, insbesondere ein Band eines eingeschlossenen Gurt- oder Taschenbeförderers;
- eine Bedienanordnung nach mindestens einem der vorstehenden Ansprüche, wobei die erste Bedieneinheit (950) an der Beladeeinheit angeordnet ist, die zweite Bedieneinheit an der Entladeeinheit angeordnet ist und mindestens eine weitere Bedieneinheit an der mindestens einen weiteren Transporteinheit angeordnet ist.

10. Verfahren zum Bedienen einer mobilen Förderanordnung (1) in einem untertägigen Bergbau um kontinuierlichen Befördern von gebrochenem Material in einer Beförderrichtung nach Anspruch 9, das Verfahren umfassend
- Bereitstellen einer mobilen Förderanordnung (1) nach Anspruch 9;
**gekennzeichnet durch**
- Abtasten mindestens eines Abschnitts der Umgebung zweidimensional im Wesentlichen parallel zu der Beförderrichtung, insbesondere eines Abschnitts von mehr als 90°, vorzugsweise eines Abschnitts von 180° oder dreidimensional mit dem an der ersten Transporteinheit angeordneten ersten Sensor;
- Abtasten mindestens eines Abschnitts der Umgebung zweidimensional im Wesentlichen parallel zu der Beförderrichtung, insbesondere eines Abschnitts von mehr als 90°, vorzugsweise eines Abschnitts von 180°, oder dreidimensional mit dem an der zweiten Transporteinheit angeordneten zweiten Sensor;
- Vergleichen zweiter Abtastergebnisse von dem zweiten Sensor der zweiten Bedieneinheit mit ersten Abtastergebnissen von dem ersten Sensor der ersten Bedieneinheit zu vergleichen, wobei die zweiten Abtastergebnisse an einer Fahrposition der zweiten Transporteinheit erhalten werden, die einer Fahrposition der ersten Transporteinheit entspricht, an der die ersten Abtastergebnisse erhalten wurden, wobei der Vergleich der Abtastergebnisse ermöglicht, die Navigation und/oder Lenkung und/oder Bewegung der ersten Transporteinheit (100) und/oder der zweiten Transporteinheit (105) und/oder der gesamten mobilen Förderanordnung (1) zu überwachen, zu steuern und/oder zu korrigieren.

11. Verfahren nach Anspruch 10, umfassend das Abtasten mindestens eines Abschnitts der Umgebung orthogonal zur Beförderrichtung, vorzugsweise mindestens eines Abschnitts oberhalb einer horizontalen Ebene, insbesondere eines Abschnitts von mehr als 90° oder mehr als 180° mit dem mindestens einen an der ersten Bedieneinheit und/oder der zweiten Bedieneinheit und/oder einer weiteren Bedieneinheit angeordneten Sensor.

12. Verfahren gemäß mindestens einem der Ansprüche 10 bis 11, umfassend
- Empfangen von Daten von einer Benutzerschnittstelle und/oder von einer vorhergehenden Vorrichtung, insbesondere einer Schneidemaschine, insbesondere von Lenkdaten zum Führen entlang eines Fahrwegs.

13. Verfahren gemäß mindestens einem der Ansprüche 10 bis 12, wobei
- die zweite Bedieneinheit (950) Daten mit der ersten Bedieneinheit austauscht;
- die zweite Bedieneinheit (950) eine Abtastanweisung schätzt und/oder bestimmt und/oder empfängt, einschließlich insbesondere einer nächsten Zeitinstanz (deltaT) und/oder eines nächsten Abstandsinkrements, um einen Abtastvorgang der Umgebung durchzuführen;
- die zweite Bedieneinheit (950) die Umgebung gemäß der Abtastanweisung abtastet;
- die zweite Bedieneinheit die Abtastergebnisse verarbeitet.

14. Verfahren gemäß mindestens einem der Ansprüche 10 bis 13, umfassend das Bestimmen der Position der ersten Bedieneinheit (950) und/oder der zweiten Bedieneinheit an einer Referenzstation.

15. Verfahren gemäß mindestens einem der Ansprüche 10 bis 11, umfassend
- Bestimmen und vorzugsweise Speichern und/oder Verarbeiten von Daten in Bezug auf Position und/oder Geschwindigkeit und/oder Beschleunigung und/oder Verlangsamung und/oder Richtungsänderung und/oder Ausfahren oder Einfahren eines Lenkzylinders einer Transporteinheit und/oder eines Hydraulikzylinders einer Beförderunterstützungsstruktur; und/oder
- Bestimmen und vorzugsweise Speichern und/oder Verarbeiten und/oder Ausgeben einer jeweiligen aktuellen Position der ersten Bedieneinheit und/oder der zweiten Bedieneinheit basierend auf der bestimmten Position und Daten.

## Revendications

1. Système d'actionnement destiné à actionner un système de roulage mobile (1) dans un site minier souterrain afin de transporter en continu un matériau fragmenté dans une direction de transport, comprenant
- une première unité d'actionnement (950) disposée au niveau d'une première unité de transport (100, 105, 205, 700, 800) du système de roulage mobile (1), et conçue pour échanger, stocker et traiter des données et pour générer un signal de direction afin de diriger la première unité de transport ;
- une seconde unité d'actionnement (950) disposée au niveau d'une seconde unité de transport (100, 105, 205, 700, 800) du système de roulage mobile (1), et conçue pour échanger, stocker et traiter des données et pour générer un signal de direction afin de diriger la seconde unité de transport ;
**caractérisé en ce que**
- la première unité d'actionnement (950) comprend en outre au moins un premier capteur (900a, 900b) disposé et conçu pour balayer au moins une section de l'environnement d'une manière bidimensionnelle sensiblement parallèle à la direction de transport, en particulier une section de plus de 90°, de préférence une section de 180°, ou d'une manière tridimensionnelle ;
- la seconde unité d'actionnement (950) comprend en outre au moins un second capteur (900a, 900b) disposé et conçu pour balayer au moins une section de l'environnement d'une manière bidimensionnelle sensiblement parallèle à la direction de transport, en particulier une section de plus de 90°, de préférence une section de 180°, ou d'une manière tridimensionnelle ;
- et dans lequel le système d'actionnement est conçu pour comparer les seconds résultats de balayage provenant du second capteur de la seconde unité d'actionnement avec des premiers résultats de balayage provenant du premier capteur de la première unité d'actionnement, les seconds résultats de balayage étant obtenus au niveau d'un point de déplacement de la seconde unité de transport correspondant à un point de déplacement de la première unité de transport au niveau duquel les premiers résultats de balayage ont été obtenus, la comparaison des résultats de balayage permet de surveiller, de commander et/ou de corriger la navigation et/ou la direction et/ou le mouvement de la première unité de transport (100) et/ou de la seconde unité de transport (105) et/ou de l'ensemble du système de roulage mobile (1).

2. Système d'actionnement selon la revendication 1, dans lequel au moins une autre unité d'actionnement (950) est disposée au niveau d'une autre unité de transport (205) du système de roulage mobile (1), et conçue pour échanger, stocker et traiter des données et pour générer un signal de direction afin de diriger l'autre unité de transport (205).

3. Système d'actionnement selon au moins l'une des revendications précédentes, dans lequel l'au moins un premier et/ou second capteur (900a, 900b) est disposé et conçu pour balayer au moins une section de l'environnement sensiblement orthogonale à la direction de transport, de préférence au moins une section au-dessus d'un plan horizontal, en particulier une section de plus de 90° ou de plus de 180°, d'une manière bidimensionnelle ou tridimensionnelle.

4. Système d'actionnement selon au moins l'une des revendications précédentes, dans lequel le premier capteur et/ou le second capteur sont disposés à un certain angle par rapport à un plan sensiblement horizontal, la disposition à un certain angle par rapport à un plan sensiblement horizontal signifiant un angle différent de 0°.

5. Système d'actionnement selon au moins l'une des revendications précédentes, dans lequel la première unité d'actionnement (950) est conçue pour recevoir des données provenant d'une interface utilisateur et/ou d'un dispositif précédent, en particulier une machine de découpe, en particulier des données de direction pour être guidé le long d'un chemin de déplacement.

6. Système d'actionnement selon au moins l'une des revendications précédentes, dans lequel
- la seconde unité d'actionnement (950) est conçue pour échanger des données avec la première unité d'actionnement ;
- la seconde unité d'actionnement est conçue pour estimer et/ou déterminer et/ou recevoir une instruction de balayage, comportant en particulier une instance de temps suivante (deltaT) et/ou un incrément de distance suivant, afin d'effectuer une opération de balayage de l'environnement ;
- la seconde unité d'actionnement est conçue pour balayer l'environnement conformément à l'instruction de balayage ;
- la seconde unité d'actionnement est conçue pour traiter les résultats de balayage.

7. Système d'actionnement selon au moins l'une des revendications précédentes, comprenant une station de référence disposée et conçue pour envoyer et/ou recevoir un signal de positionnement vers et/ou depuis la première unité d'actionnement et/ou la seconde unité d'actionnement afin de déterminer la position de la première unité d'actionnement (100) et/ou de la seconde unité d'actionnement (105).

8. Système d'actionnement selon au moins l'une des revendications précédentes, dans lequel le système d'actionnement,
- est conçu pour déterminer et, de préférence, stocker et/ou traiter des données relatives à la position et/ou à la vitesse et/ou à l'accélération et/ou au ralentissement et/ou au changement de direction et/ou à l'extension ou à la rétraction d'un cylindre de direction d'une unité de transport et/ou d'un cylindre hydraulique d'une structure de support de transporteur ; et/ou
- est conçu pour déterminer et, de préférence, stocker et/ou traiter et/ou émettre une position courante respective de la première unité d'actionnement et/ou de la seconde unité d'actionnement sur la base de la position et des données déterminées.

9. Système de roulage mobile (1) destiné à transporter en continu un matériau fragmenté dans une direction de transport, le système de roulage comprenant
- une unité de chargement (700) comprenant une unité de transfert de matériaux destiné à recevoir un matériau fragmenté, l'unité de transfert de matériaux comprenant une structure de transfert de matériaux disposée au niveau d'une unité de transport ;
- une unité de déchargement (800) comprenant une unité de transfert de matériaux destiné à décharger un matériau fragmenté, l'unité de transfert de matériaux comprenant une structure de transfert de matériaux disposée au niveau d'une unité de transport ;
- au moins une autre unité de transport (100, 105, 205) disposée entre l'unité de chargement (700) et l'unité de déchargement (800) ;
- un élément de transport destine à transporter un matériau fragmenté, en particulier une bande d'un transporteur à bande fermé ou d'un transporteur à poches ;
- un système d'actionnement selon au moins l'une des revendications précédentes, dans lequel la première unité d'actionnement (950) est disposée au niveau de l'unité de chargement, la seconde unité d'actionnement est disposée au niveau de l'unité de déchargement et au moins une autre unité d'actionnement est disposée au niveau de l'au moins une autre unité de transport.

10. Procédé destiné à actionner un système de roulage mobile (1) dans un site minier souterrain afin de transporter en continu un matériau fragmenté dans une direction de transport selon la revendication 9, le procédé comprenant les étapes consistant à
- fournir un système de roulage mobile (1) selon la revendication 9 ;
**caractérisé en ce que**
- balayer au moins une section de l'environnement d'une manière bidimensionnelle sensiblement parallèle à la direction de transport, en particulier une section de plus de 90°, de préférence une section de 180°, ou d'une manière tridimensionnelle avec le premier capteur disposé au niveau de la première unité de transport ;
- balayer au moins une section de l'environnement d'une manière bidimensionnelle sensiblement parallèle à la direction de transport, en particulier une section de plus de 90°, de préférence une section de 180°, ou d'une manière tridimensionnelle avec le second capteur disposé au niveau de la seconde unité de transport ;
- comparer les seconds résultats de balayage provenant du second capteur de la seconde unité d'actionnement avec des premiers résultats de balayage provenant du premier capteur de la première unité d'actionnement, les seconds résultats de balayage étant obtenus au niveau d'un point de déplacement de la seconde unité de transport correspondant à un point de déplacement de la première unité de transport au niveau duquel les premiers résultats de balayage ont été obtenus, la comparaison des résultats de balayage permet de surveiller, de commander et/ou de corriger la navigation et/ou la direction et/ou le mouvement de la première unité de transport (100) et/ou de la seconde unité de transport (105) et/ou de l'ensemble du système de roulage mobile (1).

11. Procédé selon la revendication 10, comprenant l'étape consistant à balayer au moins une section de l'environnement orthogonale à la direction de transport, de préférence au moins une section au-dessus d'un plan horizontal, en particulier une section de plus de 90° ou de plus de 180° avec l'au moins un capteur disposé au niveau de la première unité d'actionnement et/ou de la seconde unité d'actionnement et/ou d'une autre unité d'actionnement.

12. Procédé selon au moins l'une des revendications 10 à 11, comprenant l'étape consistant à
- recevoir des données provenant d'une interface utilisateur et/ou d'un dispositif précédent, en particulier une machine de découpe, en particulier des données de direction pour être guidé le long d'un chemin de déplacement.

13. Procédé selon l'une au moins des revendications 10 à 12, dans lequel
- la seconde unité d'actionnement (950) échange des données avec la première unité d'actionnement ;
- la seconde unité d'actionnement (950) estime et/ou détermine et/ou reçoit une instruction de balayage, comportant en particulier une instance de temps suivante (deltaT) et/ou un incrément de distance suivant, afin d'effectuer une opération de balayage de l'environnement ;
- la seconde unité d'actionnement (950) balaye l'environnement conformément à l'instruction de balayage ;
- la seconde unité d'actionnement traite les résultats de balayage.

14. Procédé selon l'une au moins des revendications 10 à 13, comprenant l'étape consistant à déterminer la position de la première unité d'actionnement (950) et/ou de la seconde unité d'actionnement au niveau d'une station de référence.

15. Procédé selon au moins l'une des revendications 10 à 11, comprenant les étapes consistant à
- déterminer et, de préférence, stocker et/ou traiter des données relatives à la position et/ou à la vitesse et/ou à l'accélération et/ou au ralentissement et/ou au changement de direction et/ou à l'extension ou à la rétraction d'un cylindre de direction d'une unité de transport et/ou d'un cylindre hydraulique d'une structure de support de transporteur ; et/ou
- déterminer et, de préférence, stocker et/ou traiter et/ou émettre une position courante respective de la première unité d'actionnement et/ou de la seconde unité d'actionnement sur la base de la position et des données déterminées.
